# EUROPEAN PATENT SPECIFICATION

(11) **EP 3 822 107 B1**
(45) Date of publication and mention of the grant of the patent: **28.12.2022**
(21) Application number: 19209117.1
(22) Date of filing: 14.11.2019
(51) Int. Cl.: B60K 35/00, B60K 37/04, B60R 11/00, G02F 1/00, G09F 21/04

(54) **DISPLAY SYSTEM**
ANZEIGESYSTEM
SYSTÈME D'AFFICHAGE

(43) Date of publication of application: 19.05.2021
(73) Proprietor: Visteon Global Technologies, Inc., Van Buren Township, MI 48111 (US)
(72) Inventor: KOCH, Marcus, 76337 Waldbronn (DE); WALZ, Thomas, 76547 Sinzheim (DE); PETKOV, Dimitar, 1784 Sofia (BG); HRISTOV, Aleksandar, 7200 Razgrad (BG); YORDANOV, Ivan, 5400, Sevlievo (BG); URILOV, Peyu, 1784 Sofia (BG)
(74) Representative: MERH-IP Matias Erny Reichl Hoffmann Patentanwälte PartG mbB

(56) References cited:
- EP-A1- 3 255 745
- US-A1- 2015 042 920
- US-A1- 2017 153 487

## Description

### TECHNICAL FIELD

The invention relates to a display system, such as for a vehicle. The display system includes one or more layers secured to a frame via a fixation element.

### BACKGROUND

For example United States Patent Application No. US 2017/153 487 A1 discloses a display device, in particular an irregular shape display having a hole. The display device is used, for example, for an instrument cluster in a vehicle. A needle for a tachometer or speedometer may penetrate the hole.

A vehicle may include a conventional display. For example, the conventional display may be attached to a dashboard of the vehicle. The conventional display may show visual content to an occupant in the vehicle, such as navigational information, vehicle performance information, or entertainment information.

The conventional display includes a cover lens adhered to a frame via an adhesive. The cover lens includes a thermal expansion coefficient that differs significantly with a thermal expansion coefficient of the frame. For example, in the case where the cover lens is glass, and the frame is Magnesium, the respective thermal expansion coefficients may be 8.5 µm/(m*K) and 25 µm/(m*K). In that case, the thermal expansion coefficients differ by a factor of nearly 3. Because of the differing thermal expansion coefficients, the cover lens expands and contracts differently than the frame. The differing thermal expansion coefficients induce thermal stresses into the conventional display, particularly the adhesive. For example, the differing thermal expansion coefficients can induce high shearing stresses at different temperatures. This can be exacerbated by the fact that the conventional display must be designed to operate over a wide temperature range, such as a temperature range that spans cold, winter climates (at or below freezing), hot, summer climates, and operational temperatures far above climatic temperatures, which may be attributable to the emission of heat by various components within the conventional display. Additionally, shearing stresses may be impacted by dimensions, including shape, such as curvature, of the cover lens and the frame. All of this can be particularly challenging to the adhesive that is responsible for adhering the cover lens to the frame.

To increase the robustness of the adhesive, one, in theory, could simply increase the amount of adhesive to be used. Under this approach, the adhesive creates a significant border (e.g., several millimeters or more) on the cover lens and the frame. Furthermore, the adhesive has a thickness of roughly half the size of the significant border (e.g., several millimeters or more divided by two). However, this theoretical approach would reduce a viewing area for showing the visual content. This tradeoff runs contrary to consumer taste, which is to maximize the viewing area and minimize (if not eliminate) any border. Additionally, production/manufacturing challenges often prevent the theoretical approach from being a viable solution. From cost increase due to usage of more adhesive, to complexity challenges of being able to repeatedly disperse equal amounts of large quantity of adhesive in identical patterns, to increases in curing times, the theoretical approach is often impractical for increasing the robustness of the adhesive.

### BRIEF SUMMARY OF THE INVENTION

The invention relates to a display system according to claim 1. The display system may be embedded into a vehicle. The display system includes a frame having a recess, a layer, and a fixation element. A layer (display layer) may be a film, a panel, a lens, a polarizing filter, a glass substrate, a louvre filter, etc. In some embodiments, a layer may be secured by the fixation element to a frame of the vehicle. Further examples for a layer may be a window pane and a windshield of a vehicle. The frame may be, for example, an element of a chassis of the vehicle, a housing of a device, in particular of a display device and/or a touchscreen device, etc.

The fixation element includes a first part and a second part extending from the first part. The first part includes a connection area of the first part for securing the fixation element to the layer. A fixation between the first part of the fixation element and the layer, as a result of securing the fixation element to the layer, may be a rigid fixation. The rigid fixation may comprise an adhesive, a silicon, bolts and/or screws, etc. To maintain such a rigid fixation within a large temperature range, temperature coefficients of the layer and the fixation element may correlate. The second part includes a connection area of the second part for securing the fixation element in the recess of the frame. Securing the second part in the recess of the frame may result in a fixation between the second part of the fixation element and the frame. The fixation between the second part of the fixation element and the frame may be flexible to compensate differences in temperature expansion between the fixation element and the frame. Examples for a flexible fixation may be fixations comprising an adhesive or an silicon, etc. In some embodiments the fixation between the second part of the fixation element and the frame may be a rigid fixation, for example a connection comprising one or more bolts, screws, a split pin, etc.

In some embodiments the display system may comprise further layers, which may be secured to the layer and/or the first part of the fixation element.

In some embodiments the layer secured to the fixation element may be a cover lens, an outermost layer apart from anti-scratch, etc. The layer secured to the fixation element may be made out of glass or plastic (synthetic materials).

The second part of the fixation element may be attached flexibly within the recess of the frame, such as by a flexible connection component.

According to the invention, the display system comprises a plurality of second parts, wherein each of the second parts extend from the first part of the fixation element and each of the second parts comprises a connection area of the second part, and the frame comprises one or more recesses for securing the connection areas of the plurality of second parts to the frame. Among other things, this has the advantage that the fixation element is more flexible in the area of the second parts, since forces are at first compensated on the weakest / most flexible parts. As a result, compensation of differences in temperature elongation may be compensated optimally as intended by the fixation element itself and not necessarily by a connection between the frame and the fixation element and/or a connection between the fixation element and the layer.

In some embodiments, one or more second parts may share a recess. As a result, a second part may be fixed looser to the frame, which may advantageously reduce stress when temperature changes and differences in temperature expansion between the frame and the layer occur. In some embodiments, only one second part may be attached to a single recess. This may improve the fixation between the frame and the second part of the fixation element.

According to another aspect, one or more connection areas of the second parts may be fixed or secured to the one or more recesses of the frame with a connection component. A connection component may be a rigid component like a screw, a bolt, etc. Alternatively, or in addition a connection component may be a flexible component like an adhesive, a spring, etc. An advantage thereof may be that flexibility of the connection between a frame and the fixation element may be adapted to the application.

Since the frame comprises the one or more recesses, a connection component, for example, an adhesive, a silicon, a rubber, etc., may be filled into the recesses efficiently. Among other things, this may have the advantage, that, if the layer is attached to the frame by the fixation element, it may be avoided that parts of the connection component may, for example, drop out of the moved layer. As a result, mounting of the layer to the frame may be simplified and improved. Furthermore, the effective interface area between the connection areas of the second parts and the connection areas of the recesses may be enlarged.

According to an aspect, each of the second parts of the fixation element may form an angle with the layer. This may have the advantage, that a flexible contact between the layer and the frame may be transferred from the layer plane to a plane angled away from the layer. Since a flexible contact needs more space to ensure fixation, even if parts of the layer are displaced relative to the frame due to different temperature expansions, it may be advantageous to arrange the position of the flexible contact angled away from the layer plane. This arrangement may reduce a size of a contact surface of the layer, which may lead to a larger display area of the layer without adapting the overall size.

According to an aspect, an angle between a second part and the layer may be corresponding to an angle between another second part and the layer. This may improve fixation of the fixation element to the frame, since each second part may be adapted to a direction of force acting between the layer and the frame.

According to a further aspect, two or more second parts may be arranged in a common plane. This may be advantageous for mounting the layer to the frame by positioning the connection areas of second parts of the fixation element in the recesses of the frame, if the fixation element has been attached to the layer before.

According to a further aspect, the fixation element including the first part and the second parts may be comb shaped. The second parts may form the teeth of the comb. Thus, it may be possible to compensate temperature expansion of a surface of the layer in three dimensions. A compensation of temperature expansion in two directions in space in the layer plane may be relevant, since the layer may expand or contract not only in one dimension, but at least in two directions based on a form of the layer. The third direction in space may be in particular relevant, when the layer is not planar, but rather, for example, curved or bended.

According to an aspect, a diameter of at least one second part may increase and/or may decrease from the base of the second part to an end portion of the one second part. This may have the advantage that forces, which may hamper movement of second parts in the connection component into or out of recesses may be adjusted, when the layer has been mounted to the frame via the fixation element. This may in particular be relevant, if a layer has, for example, a humpy or bended shape.

According to an aspect, two or more second parts may be spaced equally apart from direct neighboring second parts. Thus, a uniform fixation of the layer to the frame may be obtained. This may be advantageous to fix the layer with a predetermined strength to the frame with a minimum effort.

According to a further aspect, a space between direct neighboring second parts may increase or decrease towards a corner of the layer. Providing more second parts (teeth) may improve the strength of the fixation, but shearing stress may be increased in case of a temperature expansion, since there may be a larger friction between the second parts and the connection component in the recesses.

According to an aspect, at least one of the second parts of the fixation element may have a cross-section of the group: circular, triangular, rectangular, star-shaped, trapezoidal, flat. By adapting the cross-section of the second parts, a friction between the second parts and the connection component may be adapted, in particular a friction counteracting a relative movement between the layer and the frame in the layer plane.

According to another aspect, at least one of the second parts having a flat profile may be twisted along a longitudinal axis thereof. This may have the advantage that in dependence on a material and a form of a second part (tooth), the second part may be bendable in a certain direction. As a result, a second part itself may be capable to compensate at least parts of a difference in temperature expansion between the frame and the layer.

According to an aspect, a twist angle may be dependent on a position of a second part of the fixation element. Based on the material and the form of a second part, a second part may be only bendable in predetermined directions. This may be an advantage, since in the non- or less-bendable directions a second part (tooth) may provide stability, while in a direction, a temperature expansion may occur, the second part may be more flexible compared to other directions. As a result, a fixation having a high strength may be obtained, while flexibility to compensate differences in temperature expansion between the frame and the layer may be ensured at the same time.

According to a further aspect, a profile of the fixation element comprising the first and a second part may be L-shaped or T-shaped. The first and a second part forming a L may have the advantage that a display area of a layer may be increased, since the space intensive recess may be positioned closer to edges of the layer. The first and a second part forming a T may have the advantage, that a torque on the fixation of the fixation element to the layer may be reduced. In particular, embodiments where the first and a second part form a non-centered T both, the advantage of the L- and the T-shape, may be used.

The present invention is described hereunder in connection with a layer to be mounted on a vehicle, but may be applied in general to various applications, where an object with a narrow rim for fixation has to be fixed onto a frame. Further, the present invention may be also applied to applications, where an object has to be fixed on a frame with a narrow rim. That is, the present invention may be applied to all applications, where the object, which has to be fixed onto the frame, and the frame exhibit different temperature expansions.

Further details, features and advantages of implementations of the present invention result from the following description of exemplary embodiments by reference to the associated figures.

### BRIEF DESCRIPTION OF THE DRAWINGS

Figure 1 schematically illustrates a section of a cross-section of a fixation for fixing a layer to a frame according to an embodiment.
Figure 2 schematically illustrates a section of a cross-section of another fixation for fixing a layer to a frame according to an embodiment.
Figure 3 schematically illustrates a section of a cross-section of another fixation for fixing a layer to a frame according to an embodiment.
Figure 4 illustrates a fixation element according to an embodiment.
Figure 5 shows an image of a fixation element according to an embodiment.
Figure 6 schematically illustrates another fixation element according to an embodiment.
Figure 7 schematically illustrates another fixation element according to an embodiment.
Figure 8a shows a section of a frame comprising recesses according to an embodiment.
Figure 8b shows a section of a fixation element suitable to the frame of Figure 8a according to an embodiment.

### DETAILED DESCRIPTION OF THE INVENTION

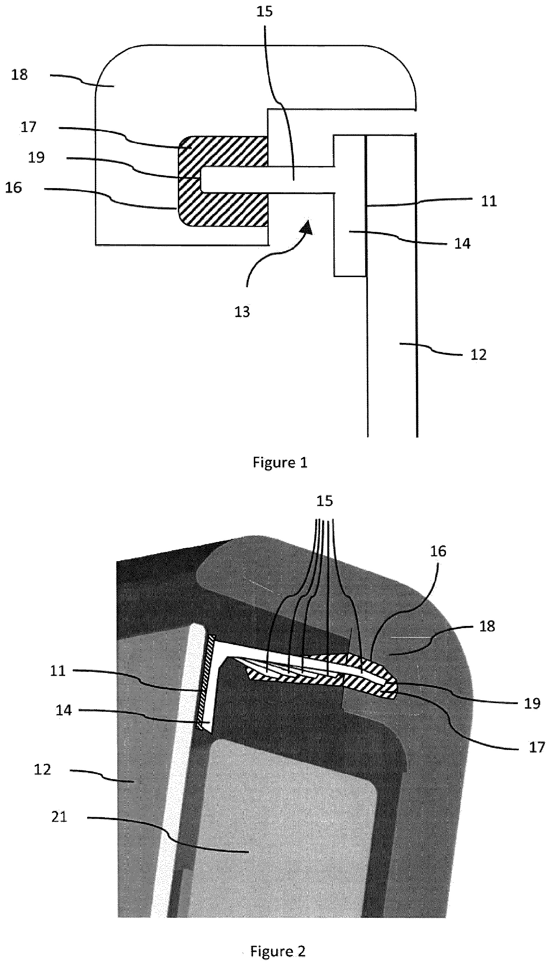

Figure 1 schematically illustrates a section of a cross-section of a fixation for fixing a layer to a frame according to an embodiment. A fixation element 13 comprising a first part 14 and a second part 15 is shown. The first part 14 is attached rigidly to the layer 12 with a fixation area of the first part 11. The fixation between the first part 14 and the layer 12 may be an adhesive connection, a bolting connection, a clamp connection, a rivet connection, etc. A connection for the fixation between the first part 14 and the layer 12 may be selected in dependence on a size of the layer and differences in thermal expansion coefficients of the materials of the layer and the fixation element. It may be also possible to combine some of these kinds of fixing connections.

The second part 15 of the fixation element 13 comprises a connection area of second part 19 to be connected to a recess connection area 16 of a recess of the frame 18 with a connection component 17. The connection component 17 may be an adhesive, which may be flexible, such that the second part 15 may be arranged movable in the recess of the frame 18.

The size of the recess may depend on the size of the layer and differences in thermal expansion coefficients of the materials of the layer and the fixation element. Further, the size of the recess may depend on a predetermined temperature range and/or the size of the second part of the fixation element. In some embodiments, the size of a recess may depend on a position of the recess relative to the layer, in particular, when the layer is attached rigidly to the frame at one or more positions.

In Figure 1, the first and the second part 14, 15 form a non-centered T. This may have an advantage, that the torques on the connection between the layer and the fixation element may be reduced, while the recess may be positioned as close as possible to an edge of the layer.

Figure 2 schematically illustrates a section of a cross-section of another fixation for fixing a layer to a frame according to an embodiment. The fixation element comprises multiple second parts 15, whose end portions are attached with the connection area of second part 19 to a recess connection area 16 of a single recess with a recess connection area 16 of the frame 18. Contrary to the fixation element of Figure 1, the fixation element of Figure 2 is L-shaped and forms a comb with the second parts 15 being tooth shaped. Further, in Figure 2 a display 21 between the layer and the frame 18 is apparent, but may not be necessary.

In some embodiments, each of the second parts 15 may protrude and be angled from the layer 12. This may advantageously compensate shearing forces and/or improve resulting torques.

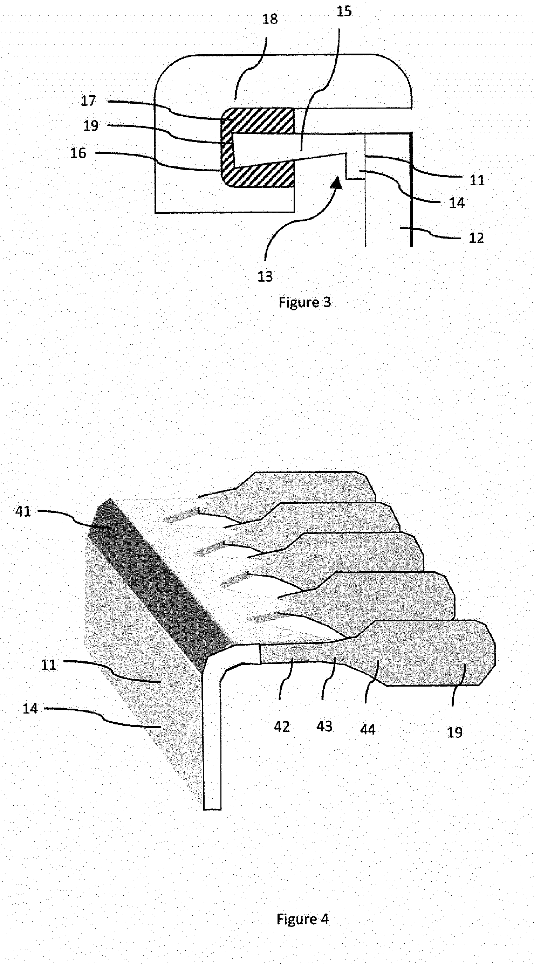

Figure 3 schematically illustrates a section of a cross-section of another fixation for fixing a layer to a frame according to an embodiment. In contrast to Figure 1, the fixation element 13 is L-shaped and the diameter of the second part increases from the basis to the end portion. Thus, a movement of the second part out of the recess may be hampered, since the connection area of second part 19 may be increased, in particular at the end portion of the second part.

Figure 4 illustrates a fixation element 13 according to an embodiment. A first part 14 may be attached to a layer and the connection area of second part may be fixed to a recess connection area of a recess as shown for example in one of the Figures 1 to 3. In some embodiments, one or more second parts may comprise a stiffener section 41 to increase stability of the fixation element 13, in particular to avoid bending of the second part in a predetermined direction. In some embodiments, a form and/or a diameter of sections of the second parts may be adapted to obtain a bending section 43 to bend a second part along a predetermined direction, a twist section 42 to twist the second part and/or a shearing section 44 to compensate shearing forces caused by temperature changes and differences in thermal expansion coefficients of the materials of the layer and the frame.

Based on a thickness of a layer and dimensions of a layer, bend sections, twist sections, stiffener sections may be utilized to obtain flexibility and rigidity in all required dimensions. The frame comprises at least one recess, which may be for example a hole or a trough. In some embodiments, a form of a recess of the frame may be adapted to a form of a second part of the fixation element and/or an angle between the second part and the layer.

A stiffener section may have a higher thickness than a normal section and/or may have a certain cross-section profile to obtain rigidity at least in one direction. A bending section may be flatter and/or thinner than other sections to obtain flexibility in at least one direction. In a twist section, a second part may be twisted along a longitudinal axis thereof such that a stiffener section and/or a bending section may provide a predetermined rigidity and flexibility in predetermined directions. An angle of a twist may be dependent on a position of a second part 15 relative to a layer.

In some embodiments, a second part 15 may comprise one or more stiffener sections, bending sections and/or twist sections. These sections may be equally dimensioned for all second parts 15 or may be dimensionally adapted for all or some second parts, for example with respect to a position of the second part relative to the layer.

As a result, a second part 15 may be configured to provide several degrees of freedom, in particular in combination with the connection component 17. Thus, shearing forces as well as torques acting in/on a layer fixed on a frame 18 may be reduced or eliminated, while a predetermined strength of the fixture may be achieved at the same time.

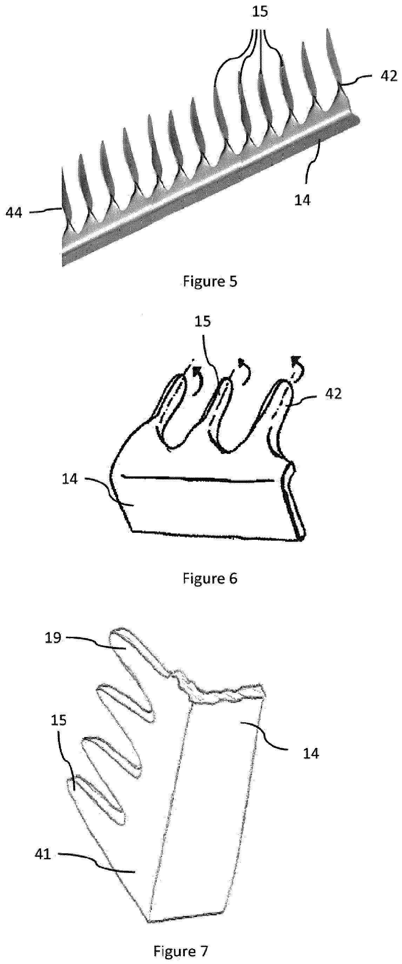

Figure 5 shows an image of a fixation element according to an embodiment. The fixation element may be made of steel, which may have a thermal expansion coefficient similar to glass. When the layer is made out of plastic, the fixation element may be made also out of plastic of the same kind or a kind different to the layer's kind. As shown in the Figure, the second parts 15 are twisted at their basis with an angle of about 90 degrees. As a result, a second part may be bendable to a next second part and may be more rigid in a direction perpendicular to a neighboring second part. A twist may advantageously have an angle between 0 and 90 degrees and each second part may be dimensioned individually, in particular with respect to its twist angle.

Figure 6 schematically illustrates another fixation element according to an embodiment. It is shown that the second parts 15 may be twisted at an end portion of the second parts. This may be advantageous to increase rigidity of a fixation between the connection area of the second part and a recess connection area of a frame by a connection component, which may be an adhesive.

Figure 7 schematically illustrates another fixation element according to an embodiment. In Figure 7, the second parts are not twisted, but the second parts are becoming slimmer from a second part's basis to an end portion of the one second part. This may have the advantage, that a force to move a second part into and out of a recess may be reduced. Thus, flexibility in this direction may be improved.

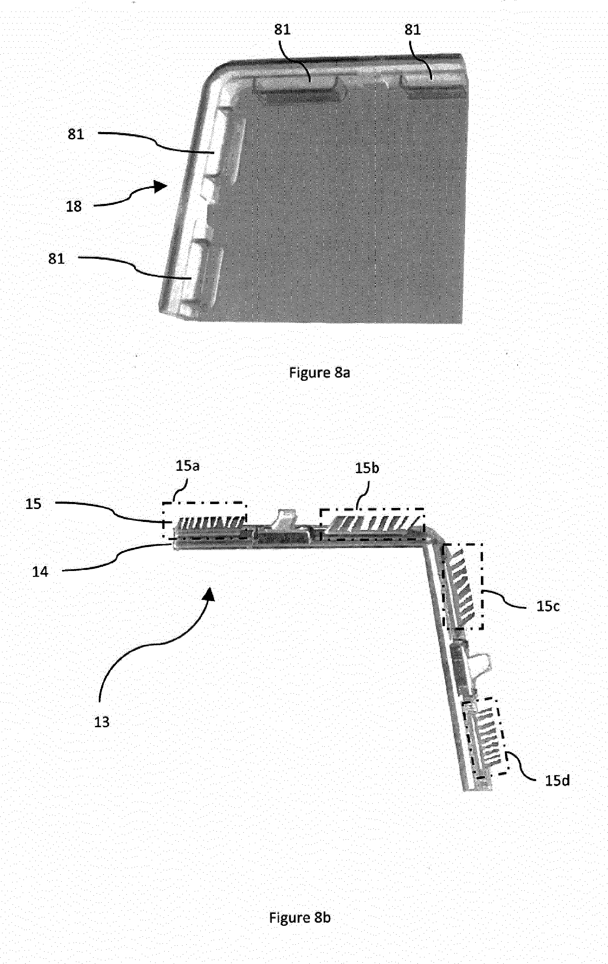

Figure 8a shows a section of a frame 18 comprising recesses 81 according to an embodiment. Figure 8b shows a section of a fixation element 13 suitable to the frame 18 of Figure 8a according to an embodiment. In a recess 81, connection areas of second parts 15 may be fixed to recess connection areas of the frame 18 with a connection component. In particular, it is apparent that the second parts 15 are grouped in groups 15a, 15b, 15c, 15d and each group 15a; 15b; 15c; 15d may be fixed to a single recess 81. Such a design of a connection between the frame 18 and the fixation element 13 may have the advantage that the amount of a connection component connecting the connection area of second parts of second parts with recess connection areas of recess may be reduced. Further, forces on the frame 18 may be bundled to a few positions, which may be advantageous in particular for the structural design of the frame 18.

In some embodiments, a gasket, which is not shown in the figures, may be placed between the frame and the layer and/or between the frame and the fixation element. This may prevent liquids and/or dirt particles to weaken the fixations in particular adhesives as, for example, a connection component.

### REFERENCE NUMERALS

- 11: connection area of first part
- 12: layer
- 13: fixation element
- 14: first part
- 15: second part
- 15a, 15b, 15c, 15d: groups of second parts
- 16: recess connection area
- 17: connection component
- 18: frame
- 19: connection area of second part
- 21: display unit
- 41: stiffener section
- 42: twist section
- 43: bending section
- 44: shearing section
- 81: recess

## Claims

1. A display system comprising:
a frame (18) having a recess (81);
a layer (12); and
a fixation element (13),
wherein the fixation element (13) includes a first part (14) and a second part (15) extending from the first part (14), the first part (14) includes a connection area of the first part (11) for securing the fixation element to the layer (12), and the second part (15) includes a connection area of the second part (19) for securing the fixation element (13) in the recess (81) of the frame (18), **characterized in that**
the fixation element comprises a plurality of second parts, wherein each of the second parts extend from the first part (14) of the fixation element (13) and comprises a connection area of the second part (19), and the frame comprises one or more recesses for securing the connection areas (19) of the plurality of second parts to the frame.

2. The display system according to claim 1, wherein
one or more connection areas (19) of the plurality of second parts are fixed or secured to the one or more recesses of the frame with a connection component (17).

3. The display system according to claim 1, wherein
an angle between a second part (15) and the layer (12) is corresponding to an angle between another second part (15) and the layer (12).

4. The display system according to claim 1, wherein
two or more second parts (15) are arranged in a common plane.

5. The display system according to one of claims 1 to 4, wherein
the fixation element (13), with respect to the first part (14) and the plurality of second parts (15) extending from the first part (14), is comb shaped.

6. The display system according to one of claims 1 to 5, wherein
a diameter of at least one second part (15) increases or decreases from a base of the one second part (15) to an end portion of the one second part (15).

7. The display system according to one of claims 1 to 6, wherein
two or more second parts (15) are spaced equally apart from direct neighboring second parts (15).

8. The display system according to one of claims 1 to 7, wherein
a space between direct neighboring second parts (15) increases or decreases towards a corner of the layer (12).

9. The display system according to one of the claims 1 to 8, wherein
at least one of the second parts (15) of the fixation element (13) has a cross-section of the group:
circular, triangular, rectangular, star-shaped, trapezoidal, flat.

10. The display system according to claim 9, wherein
at least one of the second parts (15) having a flat profile is twisted along a longitudinal axis thereof.

11. The display system according to claim 10, wherein
a twist angle is dependent on a position of a second part (15) of the fixation element (13).

12. The display system according to one of claims 1 to 11, wherein
a profile of the fixation element (13) comprising the first part (14) and a second part (15) is L-shaped or T-shaped.

13. The display system according to one of claims 1 to 12, wherein
at least one second part includes a twist section (42), a shearing section (44) distal to the twist section (42), and a bending section therebetween the twist section (42) and the shearing section (44).

14. The display system according to one of claim 1 to 13, wherein
the fixation element (13) includes a stiffener section (41) between the first part (14) and at least one second part (15).

15. The display system according to claim 1 to 14, wherein
the first part (14) is aligned on a first plane, and the at least one second part (15) is aligned on a second plane that intersects the first plane.

## Patentansprüche

1. Anzeigesystem, das Folgendes umfasst:
einen Rahmen (18) mit einer Aussparung (81);
eine Schicht (12); und
ein Befestigungselement (13),
wobei das Befestigungselement (13) ein erstes Teil (14) und ein zweites Teil (15), das sich von dem ersten Teil (14) erstreckt, beinhaltet, wobei das erste Teil (14) einen Verbindungsbereich des ersten Teils (11) zum Sichern des Befestigungselements an der Schicht (12) beinhaltet und das zweite Teil (15) einen Verbindungsbereich des zweiten Teils (19) zum Sichern des Befestigungselements (13) in der Aussparung (81) des Rahmens (18) beinhaltet, **dadurch gekennzeichnet, dass**
das Befestigungselement eine Vielzahl von zweiten Teilen umfasst, wobei sich jedes der zweiten Teile von dem ersten Teil (14) des Befestigungselements (13) erstreckt und einen Verbindungsbereich des zweiten Teils (19) umfasst, und der Rahmen eine oder mehrere Aussparungen zum Sichern der Verbindungsbereiche (19) der Vielzahl von zweiten Teilen am Rahmen umfasst.

2. Anzeigesystem nach Anspruch 1, wobei
ein oder mehrere Verbindungsbereiche (19) der Vielzahl von zweiten Teilen mit einer Verbindungskomponente (17) an der einen oder den mehreren Aussparungen des Rahmens befestigt oder gesichert sind.

3. Anzeigesystem nach Anspruch 1, wobei
ein Winkel zwischen einem zweiten Teil (15) und der Schicht (12) einem Winkel zwischen einem anderen zweiten Teil (15) und der Schicht (12) entspricht.

4. Anzeigesystem nach Anspruch 1, wobei
zwei oder mehr zweite Teile (15) in einer gemeinsamen Ebene angeordnet sind.

5. Anzeigesystem nach einem der Ansprüche 1 bis 4, wobei das Befestigungselement (13) in Bezug auf das erste Teil (14) und die Vielzahl von zweiten Teilen (15), die sich von dem ersten Teil (14) erstreckt, kammförmig ist.

6. Anzeigesystem nach einem der Ansprüche 1 bis 5, wobei ein Durchmesser mindestens eines zweiten Teils (15) von einer Basis des einen zweiten Teils (15) zu einem Endabschnitt des einen zweiten Teils (15) zunimmt oder abnimmt.

7. Anzeigesystem nach einem der Ansprüche 1 bis 6, wobei zwei oder mehr zweite Teile (15) von direkt benachbarten zweiten Teilen (15) gleich beabstandet sind.

8. Anzeigesystem nach einem der Ansprüche 1 bis 7, wobei ein Abstand zwischen direkt benachbarten zweiten Teilen (15) in Richtung einer Ecke der Schicht (12) zunimmt oder abnimmt.

9. Anzeigesystem nach einem der Ansprüche 1 bis 8, wobei mindestens eines der zweiten Teile (15) des Befestigungselements (13) einen Querschnitt aus der folgenden Gruppe aufweist:
rund, dreieckig, rechteckig, sternförmig, trapezförmig, flach.

10. Anzeigesystem nach Anspruch 9, wobei
mindestens eines der zweiten Teile (15), das ein flaches Profil aufweist, entlang einer Längsachse davon verdreht ist.

11. Anzeigesystem nach Anspruch 10, wobei
ein Verdrehwinkel von einer Position eines zweiten Teils (15) des Befestigungselements (13) abhängig ist.

12. Anzeigesystem nach einem der Ansprüche 1 bis 11, wobei ein Profil des Befestigungselements (13), das das erste Teil (14) und ein zweites Teil (15) umfasst, L-förmig oder T-förmig ist.

13. Anzeigesystem nach einem der Ansprüche 1 bis 12, wobei mindestens ein zweites Teil einen Verdrehabschnitt (42), einen Scherabschnitt (44) distal zu dem Verdrehungabschnitt (42) und einen Biegeabschnitt zwischen dem Verdrehabschnitt (42) und dem Scherabschnitt (44) beinhaltet.

14. Anzeigesystem nach einem der Ansprüche 1 bis 13, wobei das Befestigungselement (13) einen Versteifungsabschnitt (41) zwischen dem ersten Teil (14) und mindestens einem zweiten Teil (15) beinhaltet.

15. Anzeigesystem nach Anspruch 1 bis 14, wobei
das erste Teil (14) auf einer ersten Ebene ausgerichtet ist und das mindestens eine zweite Teil (15) auf einer zweiten Ebene ausgerichtet ist, die die erste Ebene schneidet.

## Revendications

1. Système d'affichage comprenant :
un cadre (18) présentant un évidement (81) ;
une couche (12) ; et
un élément de fixation (13),
dans lequel l'élément de fixation (13) comporte une première partie (14) et une seconde partie (15) s'étendant depuis la première partie (14), la première partie (14) comporte une zone de connexion de la première partie (11) pour fixer l'élément de fixation à la couche (12), et la seconde partie (15) comporte une zone de connexion de la seconde partie (19) pour fixer l'élément de fixation (13) dans l'évidement (81) du cadre (18), **caractérisé en ce que** ce
l'élément de fixation comprend une pluralité de secondes parties, dans lequel chacune des secondes parties s'étend depuis la première partie (14) de l'élément de fixation (13) et comprend une zone de connexion de la seconde partie (19), et le cadre comprend un ou plusieurs évidements pour fixer les zones de connexion (19) de la pluralité de secondes parties au cadre.

2. Système d'affichage selon la revendication 1, dans lequel
une ou plusieurs zones de connexion (19) de la pluralité de secondes parties sont fixées ou solidarisées au ou aux évidements du cadre avec un élément de connexion (17).

3. Système d'affichage selon la revendication 1, dans lequel
un angle entre une seconde partie (15) et la couche (12) correspond à un angle entre une autre seconde partie (15) et la couche (12).

4. Système d'affichage selon la revendication 1, dans lequel
deux secondes parties (15) ou plus sont disposées dans un plan commun.

5. Système d'affichage selon l'une des revendications 1 à 4, dans lequel
l'élément de fixation (13), par rapport à la première partie (14) et à la pluralité de secondes parties (15) s'étendant depuis la première partie (14), est en forme de peigne.

6. Système d'affichage selon l'une des revendications 1 à 5, dans lequel
un diamètre d'au moins une seconde partie (15) augmente ou diminue depuis une base de la seconde partie (15) à une partie d'extrémité de la seconde partie (15).

7. Système d'affichage selon l'une des revendications 1 à 6, dans lequel
deux secondes parties (15) ou plus sont équidistantes de secondes parties directement voisines (15).

8. Système d'affichage selon l'une des revendications 1 à 7, dans lequel
un espace entre des secondes parties directement voisines (15) augmente ou diminue vers un coin de la couche (12).

9. Système d'affichage selon l'une des revendications 1 à 8, dans lequel
au moins une des secondes parties (15) de l'élément de fixation (13) présente une section transversale du groupe :
circulaire, triangulaire, rectangulaire, étoilée, trapézoïdale, plate.

10. Système d'affichage selon la revendication 9, dans lequel
au moins une des secondes parties (15) présentant un profil plat est torsadée le long d'un axe longitudinal de celui-ci.

11. Système d'affichage selon la revendication 10, dans lequel
un angle de torsion dépend d'une position d'une seconde partie (15) de l'élément de fixation (13).

12. Système d'affichage selon l'une des revendications 1 à 11, dans lequel
un profil de l'élément de fixation (13) comprenant la première partie (14) et une seconde partie (15) est en forme de L ou de T.

13. Système d'affichage selon l'une des revendications 1 à 12, dans lequel
au moins une seconde partie comporte une section de torsion (42), une section de cisaillement (44) distale de la section de torsion (42) et une section de flexion entre la section de torsion (42) et la section de cisaillement (44).

14. Système d'affichage selon l'une des revendications 1 à 13, dans lequel
l'élément de fixation (13) comporte une section de raidisseur (41) entre la première partie (14) et au moins une seconde partie (15).

15. Système d'affichage selon la revendication 1 à 14, dans lequel
la première partie (14) est alignée sur un premier plan, et l'au moins une seconde partie (15) est alignée sur un second plan qui coupe le premier plan.
